(19) Europäisches Patentamt European Patent Office Office européen des brevets

(11) **EP 2 379 353 B1**

(12) **FASCICULE DE BREVET EUROPEEN**

(45) Date de publication et mention de la délivrance du brevet:
**23.10.2013 Bulletin 2013/43**

(21) Numéro de dépôt: **09805766.4**

(22) Date de dépôt: **21.12.2009**

(51) Int Cl.:
**B60C 11/24** (2006.01)     **B60C 23/06** (2006.01)

(86) Numéro de dépôt international:
**PCT/FR2009/052640**

(87) Numéro de publication internationale:
**WO 2010/072962 (01.07.2010 Gazette 2010/26)**

(54) **PROCEDE D'ALERTE CONCERNANT L'USURE D'UN PNEUMATIQUE MUNI D'UN SILLON**

WARNVERFAHREN ZUR ANZEIGE DES VERSCHLEISSES EINES REIFENS MIT EINER FURCHE

ALARM METHOD FOR INDICATING THE WEAR OF A TYRE WITH A FURROW

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0859020**

(43) Date de publication de la demande:
**26.10.2011 Bulletin 2011/43**

(73) Titulaires:
• **COMPAGNIE GENERALE DES ETABLISSEMENTS MICHELIN**
  **63000 Clermont-Ferrand (FR)**
• **MICHELIN Recherche et Technique S.A.**
  **1763 Granges-Paccot (CH)**

(72) Inventeur: **PATURLE, Antoine**
**F-63430 Pont du Château (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**EP-A- 1 542 035**     **WO-A-2009/008319**
**DE-A1-102004 016 488**     **DE-A1-102006 028 411**

**Description**

L'invention concerne le domaine des pneumatiques de véhicules automobiles et la détection de leur niveau d'usure.

A mesure qu'un pneumatique roule sur un sol, sa bande de roulement qui est en contact avec le sol s'use par frottement.

Pour des raisons évidentes de sécurité, il est important de remplacer un pneumatique avant que l'usure de sa bande de roulement ne soit trop importante et risque de diminuer fortement l'adhérence sur route mouillée et en particulier sous forte hauteur d'eau (risque d'hydroplanage).

Pour faciliter le contrôle de l'usure et détecter une usure trop prononcée, les pneumatiques sont couramment munis de témoins d'usure.

Un exemple de témoin d'usure couramment utilisé consiste en une nervure ménagée au fond d'un sillon de la sculpture du pneumatique et dont la hauteur correspond à la profondeur minimale des sillons du pneumatique nécessaire à un fonctionnement correct et sûr du pneumatique. Ainsi, lorsque la bande de roulement du pneumatique est usée et que le sommet de la nervure affleure la surface externe de la bande de roulement, cela signifie que la profondeur minimale tolérée pour les sillons est atteinte, voire dépassée. Il est donc urgent de remplacer le pneumatique pour des raisons de sécurité.

Un inconvénient de ce type de témoin d'usure est qu'il nécessite la vigilance du conducteur du véhicule automobile et un contrôle visuel régulier de l'état de ses pneumatiques. Or, de nombreux conducteurs omettent de réaliser de tels contrôles et changent leurs pneumatiques trop tardivement, par exemple lorsqu'au cours d'un contrôle technique du véhicule, un garagiste vérifie l'état d'usure des pneumatiques.

Documents DE102004016488, EP1542035 et DE102006028411 divulguent des procédés d'alerte concernant l'usure d'un pneumatique.

L'invention a notamment pour but de fournir un procédé d'alerte concernant l'usure d'un pneumatique simple, fiable et peu coûteux.

A cet effet, l'invention a pour objet un procédé d'alerte concernant l'usure d'un pneumatique comprenant une bande de roulement munie d'au moins un sillon circonférentiel, dans lequel :

- on mesure le bruit de roulage du pneumatique sur un sol,
- on isole, parmi le bruit de roulage mesuré, un bruit émis dans une plage prédéterminée de fréquences voisines d'une fréquence prédéterminée de résonance d'un tronçon du sillon lors du roulage,
- on mesure l'amplitude du bruit isolé,
- on compare l'amplitude mesurée avec un seuil d'alerte prédéterminé.

Le procédé de l'invention propose d'utiliser les propriétés de résonance de sillons circonférentiels ménagés à la surface de la bande de roulement d'un pneumatique.

La partie du pneumatique en contact avec le sol est appelée aire de contact. Le tronçon du sillon circonférentiel compris dans l'aire de contact est recouvert par le sol. Ainsi recouvert, ce tronçon forme un tuyau qui entre en résonance du fait des vibrations induites par le roulage du pneumatique sur le sol.

La résonance de ce tronçon provoque un bruit spécifique caractérisé par une plage de fréquence centrée sur une fréquence de résonance dépendant de la longueur du tronçon (caractéristique quasiment indépendante de la vitesse de roulage) mais dont l'amplitude évolue en fonction de la section du tuyau qui elle-même évolue en fonction de l'usure du pneumatique.

Le procédé de l'invention permet donc, grâce à la mesure de l'amplitude du son produit par la résonance du sillon, de déterminer l'usure du pneumatique, et ce, quel que soit le type de pneumatique utilisé. Ce procédé est donc particulièrement avantageux puisqu'il peut être mis en oeuvre sans qu'il soit nécessaire de concevoir un pneumatique particulier. Un autre avantage du procédé de l'invention est que la détection est indépendante de la vitesse de roulage ce qui facilite l'algorithme de traitement du bruit et réduit son coût de mise en oeuvre.

Un procédé d'alerte selon l'invention peut en outre comprendre l'une ou plusieurs des caractéristiques suivantes.

- La fréquence prédéterminée de résonance est celle d'un tronçon du sillon de longueur sensiblement égale à la longueur de l'aire de contact du pneumatique avec le sol. En effet, comme mentionné précédemment, le sillon forme un tuyau qui entre en résonance lorsqu'il est recouvert par le sol. Or, le sillon est recouvert par le sol tout du long de l'aire de contact. Par conséquent, lorsque le sillon est recouvert par le sol, il forme un tuyau dont la longueur est sensiblement égale à la longueur de l'aire de contact du pneumatique avec le sol. Sa fréquence de résonance est donc sensiblement égale à celle d'un tuyau dont la section est égale à la section du sillon et dont la longueur est égale à la longueur de l'aire de contact.
- La fréquence prédéterminée est sensiblement égale à C/2L, où C est la vitesse de propagation du son dans l'air et L est la longueur de l'aire de contact. En effet, on sait que le premier mode propre de vibration d'un tuyau ouvert aux deux extrémités est tel que la longueur d'onde de vibration $\lambda$ est égale à deux fois la longueur du tuyau, c'est-à-dire à 2L. Or, la fréquence est égale à la vitesse de propagation du son dans l'air divisée par la longueur d'onde, c'est-à-dire à C/2L.
- Le seuil d'alerte prédéterminé est fonction d'une valeur moyenne du bruit de roulage du pneumatique sur le sol. En effet, plus le pneumatique roule à une vitesse élevée, plus les bruits parasites dus au frottement de l'aire de contact avec le sol sont importants et plus la valeur moyenne du bruit de roulage est élevée. Il est intéressant de tenir compte de ces bruits parasites pour déterminer la valeur du seuil d'alerte et ainsi éviter de déclencher une alerte à cause de bruit parasite.

- Le pneumatique à l'état neuf comprenant un sillon circonférentiel, on déclenche une alerte d'usure lorsque l'amplitude mesurée de résonance du sillon est inférieure au seuil d'alerte prédéterminé. Dans ce mode de réalisation de l'invention, à mesure de l'usure du pneumatique, la section du sillon diminue, ce qui provoque une diminution de l'amplitude acoustique de résonance du sillon. En effet, l'amplitude acoustique de résonance du sillon est directement proportionnelle à la section du tuyau formé par l'assemblage du sillon et du sol. Ainsi, lorsque le pneumatique est neuf, le sillon circonférentiel provoque un bruit d'amplitude élevé. Lorsque l'amplitude de ce bruit passe en deçà du seuil d'alerte prédéterminé, on peut considérer que la section du sillon est faible et que cela est dû à une usure prononcée du pneumatique. On peut donc déclencher une alerte d'usure.

- Le pneumatique à l'état neuf comprenant un canal circonférentiel noyé dans la bande de roulement, ledit canal formant un sillon circonférentiel lorsque le pneumatique est usé, on déclenche une alerte d'usure lorsque l'amplitude mesurée de résonance du sillon est supérieure au seuil prédéterminé. Dans cet autre mode de réalisation, le sillon circonférentiel n'apparaît que lorsque le pneumatique est usé. Lorsque le pneumatique est neuf, ce sillon a la forme d'un canal noyé dans la bande de roulement, c'est-à-dire ne débouchant pas sur la surface externe de la bande de roulement. Ainsi, lorsque le pneumatique est neuf, aucun bruit de résonance sillon n'apparaît. En revanche, lorsque le pneumatique est suffisamment usé pour que le canal circonférentiel débouche sur la bande de roulement et forme un sillon circonférentiel, celui-ci entre en résonance, ce qui provoque l'apparition d'un bruit de résonance. Ainsi, lorsque l'amplitude mesurée de résonance sillon est supérieure à un seuil prédéterminé, cela signifie que l'usure du pneumatique est telle qu'un sillon est apparu à sa surface et il est par conséquent temps de déclencher une alerte d'usure.

- Le canal présente une section d'au moins 25 mm$^2$.

- On isole, parmi le bruit de roulage de la plage prédéterminée, au moins deux pics de fréquences différentes correspondant aux bruits de résonance de deux sillons circonférentiels décalés axialement relativement au plan médian du pneumatique, puis on compare les amplitudes des deux pics. Au cours du roulage d'un pneumatique, la mise à

plat engendre une aire de contact ovalisée c'est-à-dire plus longue au centre qu'aux « épaules ». En conséquence, la longueur des tuyaux respectifs formés par des sillons décalés axialement est différente et les fréquences de résonances aussi. On déduit de la formule F = C/2L la variation relative de la fréquence par rapport à la longueur du tuyau :

$$\frac{\Delta F}{F} = -\frac{\Delta L}{L}$$, en conséquence 1% de longueur de tuyau en plus se traduit par une fréquence de résonance inférieure de 1%. On constate deux pics de résonance distincts dans la plage prédéterminée. Comme indiqué précédemment, l'amplitude de ces pics est fonction de la section des sillons. Par conséquent, dans le cas d'un pneumatique qui, à l'état neuf, comprend deux sillons de longueurs différentes dans l'aire de contact, on peut détecter une usure anormale ou dissymétrique du pneumatique si les amplitudes de résonance des deux pics ne sont pas fonction du rapport de leurs sections initiales. Bien entendu, on peut utiliser un pneumatique muni de plus de deux sillons.

L'invention sera mieux comprise à la lecture de la description qui va suivre, faite uniquement à titre d'exemple en se référant aux figures annexées dans lesquelles :

- la figure 1 représente schématiquement la bande de roulement d'un pneumatique selon un premier mode de réalisation, à l'état neuf, selon une coupe axiale et l'aire de contact de cette bande de roulement avec le sol,

- la figure 2 représente la bande de roulement de la figure 1, à l'état usé,

- la figure 3 représente le pneumatique des figures 1 et 2 en roulage sur un sol selon une coupe radiale,

- la figure 4 représente schématiquement le tuyau formé par le sillon du pneumatique lors de son roulage sur le sol,

- la figure 5 comprend trois graphiques représentant le bruit de roulage fréquentiel du pneumatique des figures 1 et 2, à l'état neuf et à l'état usé, à trois vitesses de roulage différentes,

- la figure 6 comprend un graphique représentant le bruit de roulage d'un pneumatique comprenant deux sillons circonférentiels décalés axialement relativement au plan médian du pneumatique tel que présenté à la figure 1,

- la figure 7 représente schématiquement la bande de roulement d'un pneumatique selon un second mode de réalisation, à l'état neuf, selon une coupe axiale et l'aire de contact de cette bande de roulement avec le sol,

- la figure 8 représente la bande de roulement du pneumatique de la figure 4, à l'état usé.

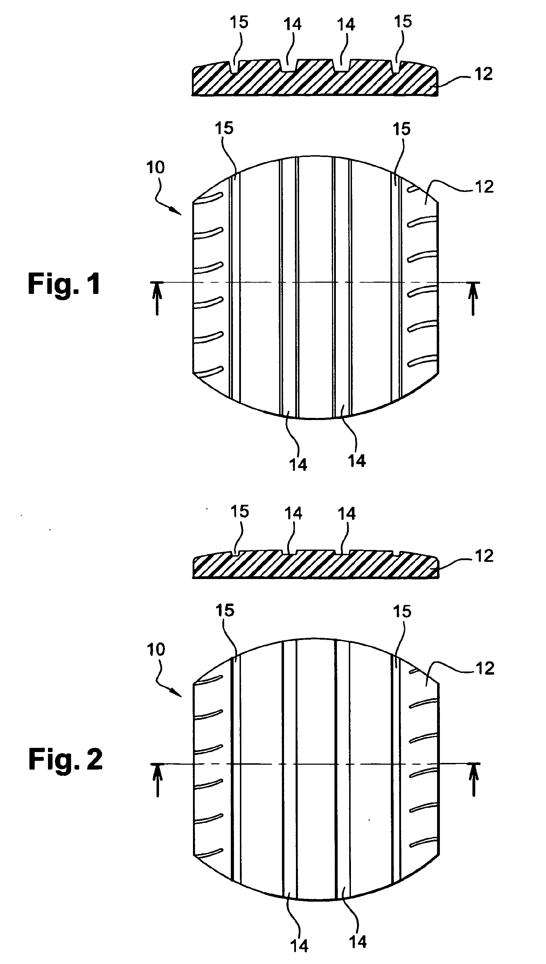

On a représenté sur la figure 1 un pneumatique désigné par la référence générale 10, selon un premier mode de réalisation, le pneumatique 10 comprenant une bande de roulement 12.

La bande de roulement 12 comprend deux sillons circonférentiels 14 disposés près du plan médian du pneumatique.

Le pneumatique 10 représenté sur la figure 1 est à l'état neuf et la profondeur des sillons 14 situés au centre de la bande de roulement est de 8 millimètres. Le pneumatique 10 comprend aussi deux sillons circonférentiels 15 disposés aux épaules c'est-à-dire proches des bords longitudinaux de l'aire de contact de la bande de roulement 12.

A mesure de l'usure de la bande de roulement du pneumatique, la profondeur des sillons circonférentiels diminue. La figure 2 représente le pneumatique de la figure 1 dans un état dans lequel la bande de roulement 12 est usée. On constate que la profondeur des sillons circonférentiels 14 et 15 est plus faible que celle des sillons du pneumatique neuf. Cette profondeur à l'état usé est par exemple égale à 2,5 millimètres.

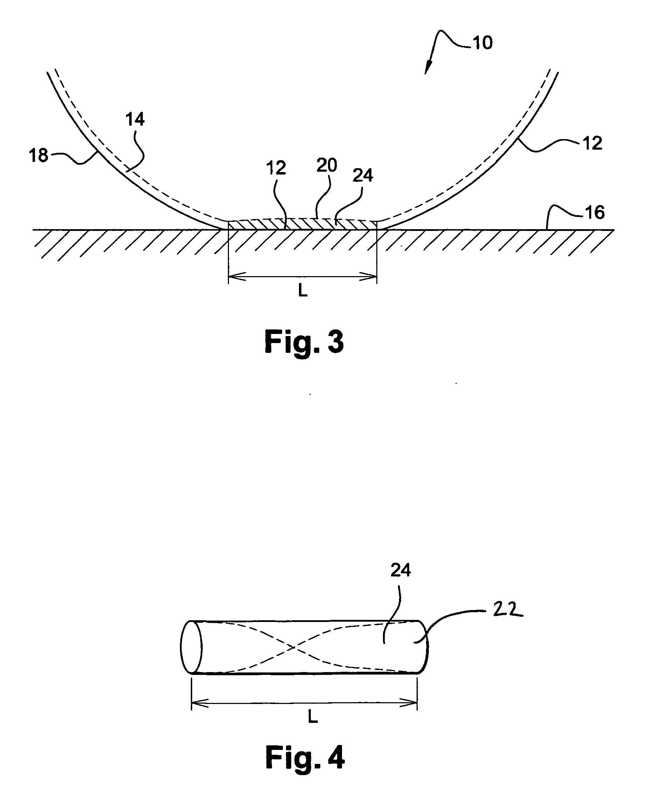

On a représenté schématiquement sur la figure 3 le pneumatique 10 en roulage sur un sol 16 vu selon une coupe radiale. Sur ce schéma, la surface externe de la bande de roulement 12 est représentée par une ligne continue 18 et le fond d'un sillon 14 ou 15 est représenté par une ligne pointillée 20. Dans la suite de la description, on se référera au sillon 14 mais une description identique peut être faite en relation au sillon 15.

L'aire de contact du pneumatique 10 avec le sol 16 est désignée par la référence 22. On note L la longueur de cette aire de contact.

Sur toute la longueur de l'aire de contact, le sillon 14 est recouvert par le sol 16. Ainsi, on peut définir une cavité 24 ayant la forme d'un tuyau délimité par le tronçon du sillon 14 au niveau de l'aire de contact 22 et par le sol 16. Ce tuyau débouche à ses deux extrémités en entrée et en sortie de l'aire de contact. L'aire de la section du tuyau 24 est sensiblement égale à l'aire de la section du sillon 14.

Etant donné que la profondeur du sillon 14 évolue à mesure que le pneumatique s'use, l'aire de la section du tuyau 24 évolue également et diminue à mesure de l'usure du pneumatique.

Le tuyau 24 est schématisé sur la figure 4 sous la forme d'un tuyau de section circulaire et de longueur L égale à la longueur de l'aire de contact du pneumatique avec le sol. Selon la théorie classique de résonance des tuyaux d'orgue, le premier mode propre de résonance du tuyau 24 représenté sur la figure 4 est tel que sa longueur d'onde $\lambda$ est égale à deux fois la longueur L de ce tuyau. On a ainsi représenté en ligne pointillée à l'intérieur du tuyau 24 de la figure 4 une courbe représentant une demi-longueur d'onde.

Etant donné que la fréquence est égale à la vitesse de propagation du son dans l'air C divisée par la longueur d'onde $\lambda$, la fréquence de résonance du tuyau 24 est égale à C/2L. On note que cette fréquence ne dépend pas de la vitesse de rotation du pneumatique sur le sol et ne dépend pas non plus de la section du tuyau 24.

Par exemple, dans le cas d'un pneumatique de type tourisme, on peut avoir une longueur de l'aire de contact au centre de l'ordre de 145 millimètres, ce qui provoque une fréquence de résonance du sillon 14 circonférentiel sensiblement égale à 1170 Hertz. Dans le cas d'un pneumatique poids lourd dont la longueur de l'aire de contact est de 260 millimètres, la fréquence de résonance est de 653 Hertz. Ces deux fréquences de résonance sont facilement détectables.

Ainsi, seule l'amplitude de résonance de ce tuyau 24 formé par le sillon 14 lors de son contact avec le sol 16 évolue en fonction de la section du tuyau, c'est-à- dire de la profondeur du sillon circonférentiel 14.

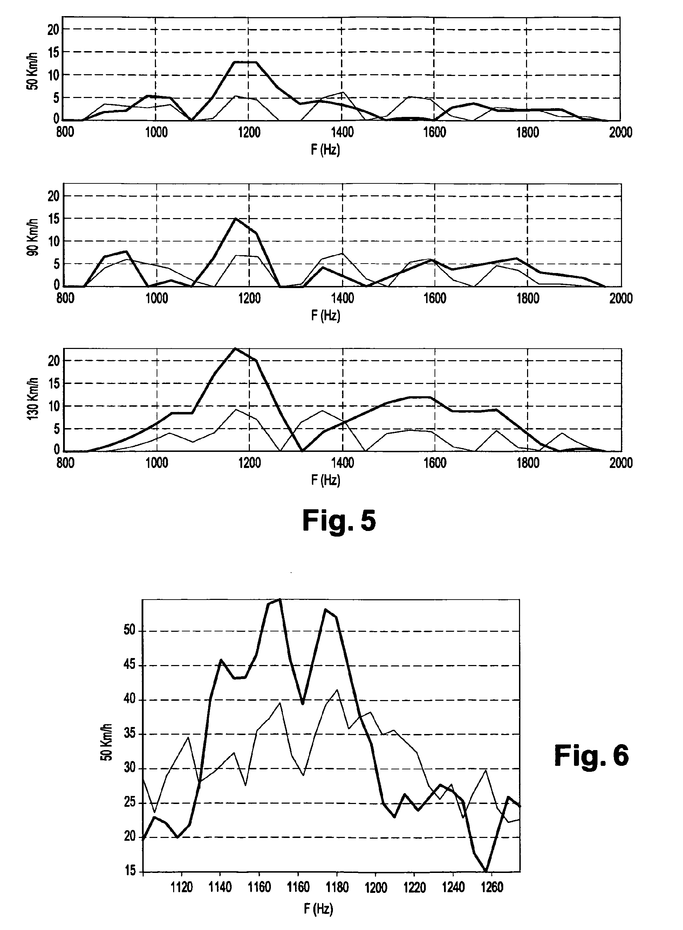

La figure 5 représente trois graphiques, à trois vitesses données, du bruit fréquentiel produit par le pneumatique à l'état neuf représenté sur la figure 1 et par le pneumatique à l'état usé représenté sur la figure 2. Le bruit fréquentiel du pneumatique à l'état neuf est représenté en trait gras tandis que le bruit fréquentiel du pneumatique à l'état usé est représenté en trait fin.

Les mesures ont été réalisés sur un véhicule BMW 3.18d en chambre sourde. Les pneumatiques sont des Michelin Primacy HP de dimension 205/55 R16. Les roulages sont effectués sur un revêtement lisse à la pression de gonflage nominale de 2,3 bar et sous la charge nominale. Le bruit de roulage est enregistré par un microphone disposé dans le passage de roue.

On constate sur ces graphiques que, quelle que soit la vitesse de roulage du pneumatique sur le sol, un pic fréquentiel de bruit apparaît aux alentours de la fréquence de 1200 Hertz lorsque le pneumatique est à l'état neuf et que ce pic caractéristique n'apparaît pas lorsque le pneumatique est à l'état usé. La fréquence de ce pic est indépendante de la vitesse de roulage du pneumatique sur le sol.

Le pic fréquentiel qui apparaît dans le cas d'un pneumatique neuf provient de la résonance des sillons circonférentiels du pneumatique. Dans le cas où le pneumatique comprend plusieurs sillons circonférentiels, chacun entre en résonance et émet un bruit de résonance. Il se peut que les longueurs des tuyaux formés par les différents sillons en contact avec le sol ne soient pas toutes identiques ce qui implique que les fréquences de résonance des différents sillons ne sont pas toutes les mêmes. C'est la raison pour laquelle sur la figure 5, le pic fréquentiel qui apparaît aux alentours de 1200 Hz est relativement large et non ponctuel.

Le procédé de l'invention propose ainsi d'utiliser ces propriétés de résonance des sillons circonférentiels 14, 15 ménagés à la surface du pneumatique pour déclencher des alertes en cas d'usure trop prononcée de la bande de roulement.

Pour cela, on procède tout d'abord en mesurant le bruit de roulage du pneumatique sur le sol.

Au cours d'une étape suivante, on isole, parmi le bruit de roulage mesuré, un bruit émis dans une plage prédéterminée de fréquences voisines d'une fréquence prédéterminée de résonance d'un tronçon du sillon lors du roulage. Comme identifié précédemment, la fréquence prédéterminée de résonance du tronçon du sillon lors du roulage est déterminée comme étant sensiblement égale à C/2L. On regarde le bruit émis dans une plage voisine de cette fréquence prédéterminée pour tenir compte d'un éventuel étalement des fréquences de résonance dues à la présence de plusieurs sillons sur la bande de roulement du pneumatique.

Ensuite, on mesure l'amplitude du bruit isolé dans cette plage de fréquences et on compare cette amplitude mesurée avec un seuil d'alerte prédéterminé.

Dans l'exemple représenté sur la figure 5, on peut définir le seuil d'alerte prédéterminé comme étant égal à la valeur 10. On constate que, lorsque l'amplitude du bruit est supérieure à ce seuil d'alerte, le pneumatique est encore relativement neuf. En revanche, lorsque l'amplitude du bruit mesuré à la fréquence de résonance du sillon est inférieure à ce seuil d'alerte, le pneumatique est usé et il est nécessaire de déclencher une alerte d'usure pour informer le conducteur de l'usure de ses pneumatiques.

On note que ce procédé de détection de l'usure du pneumatique peut être mis en oeuvre sur un pneumatique de type quelconque du moment qu'il comprend au moins un sillon circonférentiel 14 dont la fréquence de résonance peut être déterminée de manière simple grâce à la longueur de l'aire de contact.

La figure 6 présente une autre analyse fréquentielle de la plage de bruit de roulage centrée vers 1200 Hz enregistré à une vitesse de 90 km/h. Cette analyse est réalisée avec une meilleure résolution que celle de la figure 5. On constate que le pic précédemment décrit correspond en fait à deux pics très proches. Ces deux pics sont liés au fait que la sculpture du pneumatique comprend d'une part deux sillons circonférentiels 14 disposés à proximité du plan médian du pneumatique et de part et d'autre de celui-ci et d'autre part deux sillons circonférentiels 15 disposés aux épaules c'est-à-dire sur les bords de l'aire de contact. Comme l'indique la figure 1, l'aire de contact d'un tel pneumatique est ovalisée et la longueur des deux sillons centraux 14 est supérieure à la longueur des deux sillons latéraux 15. Les sillons centraux 14 ont une longueur de 145 mm, ce qui correspond au pic de la figure 6 visible à environ 1170 Hz ; les sillons latéraux 15 placés aux épaules ont une longueur de 142 mm ce qui correspond au pic visible à environ 1200 Hz. La variation d'amplitude de ces deux pics permet d'avoir une indication très sensible de la forme d'usure du pneumatique, notamment en cas d'usure anormale. On entend par usure anormale toute forme d'usure de la sculpture d'un pneumatique non régulière. Un roulage en carrossage ou un défaut de parallélisme entre les deux roues d'un même essieu, voire un sous-gonflage, peuvent entraîner l'apparition de telles usures anormales.

Lorsque la différence relative d'amplitude dépasse un seuil d'alerte prédéterminé, on peut déclencher une alerte pour informer le conducteur que le pneumatique présente une usure anormale, non-uniforme.

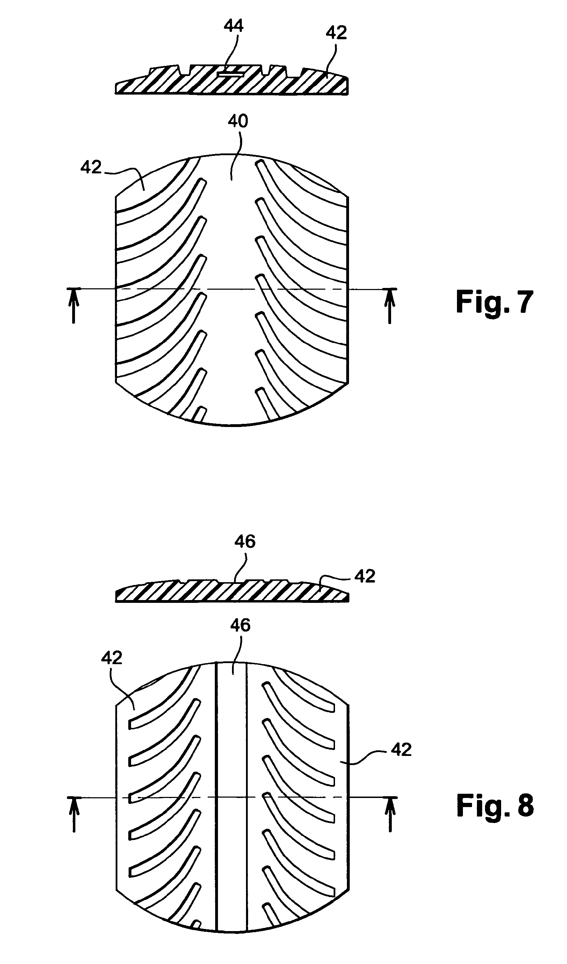

On a représenté sur les figures 7 et 8 un pneumatique 40 selon un second mode de réalisation. Ce pneumatique 40 comprend une bande de roulement 42 dans laquelle est noyé, à l'état neuf, un canal 44 circonférentiel, comme représenté sur la figure 7. Un exemple de conception d'un tel pneumatique est décrit dans le document EP 1 616 719.

On constate sur la figure 7 que le canal 44 est visible sur la coupe radiale de la bande de roulement 42 du pneumatique 40 mais que ce canal est invisible sur la vue du dessus de la bande de roulement. En effet, ce canal 44 ne débouche pas à la surface de la bande de roulement.

A mesure de l'usure de la bande de roulement 42 du pneumatique 40, la couche de gomme séparant le canal 44 de la surface extérieure de la bande de roulement s'amenuise jusqu'à disparaître. La disparition de cette couche de gomme provoque la découverte du canal circonférentiel 44 qui forme un sillon circonférentiel 46, comme représenté sur la figure 8. On remarque que ce sillon circonférentiel 46 est désormais visible, même sur la vue de dessus de la bande de roulement 42.

Comme indiqué précédemment, la présence de ce sillon circonférentiel 46 provoque un bruit de résonance lorsque le sillon est recouvert par le sol au niveau de l'aire de contact du pneumatique avec le sol.

Ainsi, lorsque le pneumatique est neuf, aucun bruit de résonance sillon ne se fait entendre tandis que, lorsque le pneumatique est usé, le sillon 46 apparaît et provoque un bruit de résonance.

On peut mettre en oeuvre une variante du procédé de l'invention dans laquelle on mesure le bruit de roulage émis à une fréquence voisine de la fréquence de résonance du sillon 46. Lorsque le pneumatique est neuf, ce bruit de résonance est absent et est donc inférieur à un seuil prédéterminé.

Dès que l'on détecte que ce bruit de résonance est supérieur au seuil prédéterminé, cela signifie que le sillon circonférentiel 46 est apparu du fait de l'usure de la bande de roulement. On peut alors déclencher une alerte pour prévenir le conducteur de l'usure de ses pneumatiques.

Ainsi, le procédé de l'invention peut être mis en oeuvre soit pour détecter la diminution de la section d'un sillon circonférentiel présent sur un pneumatique neuf, soit pour détecter l'apparition d'un sillon circonférentiel initialement noyé dans la bande de roulement, ces deux phénomènes résultant de l'usure du pneumatique.

**Revendications**

1. Procédé d'alerte concernant l'usure d'un pneumatique (10) comprenant une bande de roulement (12 ;

42) munie d'au moins un sillon circonférentiel (14 ; 46), **caractérisé en ce que** :

- on mesure le bruit de roulage du pneumatique (10) sur un sol (16),
- on isole, parmi le bruit de roulage mesuré, un bruit émis dans une plage prédéterminée de fréquences voisines d'une fréquence prédéterminée de résonance d'un tronçon (24) du sillon (14 ; 46) lors du roulage,
- on mesure l'amplitude du bruit isolé,
- on compare l'amplitude mesurée avec un seuil d'alerte prédéterminé.

**2.** Procédé selon la revendication précédente, dans lequel la fréquence prédéterminée de résonance est celle d'un tronçon (24) du sillon (14 ; 46) de longueur sensiblement égale à la longueur (L) de l'aire de contact du pneumatique (10) avec le sol (16).

**3.** Procédé selon la revendication précédente, dans lequel la fréquence prédéterminée est sensiblement

égale à $\dfrac{C}{2.L}$ , où C est la vitesse de propagation du son dans l'air et L est la longueur de l'aire de contact.

**4.** Procédé selon l'une quelconque des revendications précédentes, dans lequel le seuil d'alerte prédéterminé est fonction d'une valeur moyenne du bruit de roulage du pneumatique (10) sur le sol (16).

**5.** Procédé selon l'une quelconque des revendications 1 à 4, dans lequel, le pneumatique (10) à l'état neuf comprenant un sillon circonférentiel (14 ; 46), on déclenche une alerte d'usure lorsque l'amplitude mesurée de résonance du sillon (14 ; 46) est inférieure au seuil d'alerte prédéterminé.

**6.** Procédé selon l'une quelconque des revendications 1 à 4, dans lequel, le pneumatique (10) à l'état neuf comprenant un canal circonférentiel (44) noyé dans la bande de roulement (42), ledit canal (44) formant un sillon circonférentiel (46) lorsque le pneumatique (10) est usé, on déclenche une alerte d'usure lorsque l'amplitude mesurée de résonance du sillon (46) est supérieure au seuil prédéterminé.

**7.** Procédé selon la revendication précédente, dans lequel le canal (44) présente une section d'au moins 25 mm$^2$.

**8.** Procédé selon l'une quelconque des revendications précédentes, dans lequel on isole, parmi le bruit de roulage de la plage prédéterminée, au moins deux pics de fréquences différentes correspondant aux bruits de résonance d'au moins deux sillons circonférentiels décalés axialement relativement au plan médian du pneumatique, puis on compare les amplitudes relatives des deux pics.

**Patentansprüche**

**1.** Warnverfahren betreffend den Verschleiß eines Luftreifens (10), der einen mit mindestens einer Umfangsrille (14; 46) versehenen Laufstreifen (12; 42) enthält, **dadurch gekennzeichnet, dass**:

- das Rollgeräusch des Luftreifens (10) auf einem Untergrund (16) gemessen wird,
- aus dem gemessenen Rollgeräusch ein Geräusch isoliert wird, das in einem vorherbestimmten Bereich von Frequenzen nahe einer vorherbestimmten Resonanzfrequenz eines Abschnitts (24) der Rille (14; 46) beim Rollen emittiert wird,
- die Amplitude des isolierten Geräuschs gemessen wird,
- die gemessene Amplitude mit einer vorherbestimmten Warnschwelle verglichen wird.

**2.** Verfahren nach dem vorhergehenden Anspruch, wobei die vorherbestimmte Resonanzfrequenz diejenige eines Abschnitts (24) der Rille (14; 46) einer Länge im Wesentlichen gleich der Länge (L) des Kontaktbereichs des Luftreifens (10) mit dem Untergrund (16) ist.

**3.** Verfahren nach dem vorhergehenden Anspruch, wobei die vorherbestimmte Frequenz im Wesentlichen gleich $\dfrac{C}{2.L}$ ist, wobei C die Ausbreitungsgeschwindigkeit des Schalls in der Luft und L die Länge des Kontaktbereichs ist.

**4.** Verfahren nach einem der vorhergehenden Ansprüche, wobei die vorherbestimmte Warnschwelle von einem Mittelwert des Rollgeräuschs des Luftreifens (10) auf dem Untergrund (16) abhängt.

**5.** Verfahren nach einem der Ansprüche 1 bis 4, wobei wenn der Luftreifen (10) im Neuzustand eine Umfangsrille (14; 46) enthält, eine Verschleißwarnung ausgelöst wird, wenn die gemessene Resonanzamplitude der Rille (14; 46) niedriger als die vorherbestimmte Warnschwelle ist.

**6.** Verfahren nach einem der Ansprüche 1 bis 4, wobei, wenn der Luftreifen (10) im Neuzustand einen in den Laufstreifen (42) eingebetteten Umfangskanal (44) enthält, wobei der Kanal (44) eine Umfangsrille (46) formt, wenn der Luftreifen (10) verschlissen ist, eine Verschleißwarnung ausgelöst wird, wenn die gemessene Resonanzamplitude der Rille (46) höher als die vorherbestimmte Schwelle ist.

7.  Verfahren nach dem vorhergehenden Anspruch, wobei der Kanal (44) einen Querschnitt von mindestens 25 mm$^2$ aufweist.

8.  Verfahren nach einem der vorhergehenden Ansprüche, wobei aus dem Rollgeräusch des vorherbestimmten Bereichs mindestens zwei unterschiedliche Frequenzspitzen isoliert werden, die den Resonanzgeräuschen von mindestens zwei axial bezüglich der Mittelebene des Luftreifens versetzten Umfangsrillen entsprechen, und dann die Amplituden der zwei Spitzen verglichen werden.

**Claims**

1.  Method for alerting to the degree of wear of a tyre (10) comprising a tread strip (12; 42) equipped with at least one circumferential groove (14; 46), **characterized in that**:

    - the running noise made by the tyre (10) running along a ground (16) is measured,
    - from the measured running noise, a noise emitted in a predetermined range of frequencies close to a predetermined resonant frequency of a portion (24) of the groove (14; 46) during running is isolated,
    - the amplitude of the isolated noise is measured,
    - the measured amplitude is compared against a predetermined alert threshold.

2.  Method according to the preceding claim, in which the predetermined resonant frequency is that of a portion (24) of the groove (14; 46) of a length substantially equal to the length (L) of the contact patch via which the tyre (10) is in contact with the ground (16).

3.  Method according to the preceding claim, in which the predetermined frequency is substantially equal to $\frac{C}{2.L}$, where C is the speed at which sound travels through the air and L is the length of the contact patch.

4.  Method according to any one of the preceding claims, in which the predetermined alert threshold is dependent on a mean value of the running noise of the tyre (10) running along the ground (16).

5.  Method according to any one of claims 1 to 4, in which, with the tyre (10) in the new condition comprising a circumferential groove (14; 46), a tyre wear alert is triggered when the measured amplitude of resonance of the groove (14; 46) is below the predetermined alert threshold.

6.  Method according to any one of Claims 1 to 4, in which, with the tyre (10) in the new condition comprising a circumferential channel (44) embedded in the tread strip (42), the said channel (44) forming a circumferential groove (46) when the tyre (10) becomes worn, a tyre wear alert is triggered when the measured amplitude of resonance of the groove (46) is above the predetermined threshold.

7.  Method according to the preceding claim, in which the channel (44) has a cross section of at least 25 mm$^2$.

8.  Method according to any one of the preceding claims, in which at least two spikes of different frequencies corresponding to the resonance noises of at least two circumferential grooves that are axially offset from the median plane of the tyre are isolated from the running noise in the predetermined range, then the relative amplitudes of the two spikes are compared.

Fig. 1

Fig. 2

8

EP 2 379 353 B1

**Fig. 3**

**Fig. 4**

9

**Fig. 5**

**Fig. 6**

Fig. 7

Fig. 8

## RÉFÉRENCES CITÉES DANS LA DESCRIPTION

**Documents brevets cités dans la description**

- DE 102004016488
- EP 1542035 A
- DE 102006028411
- EP 1616719 A